(19) Europäisches Patentamt
European Patent Office
Office européen des brevets

(11) **EP 3 175 967 B1**

## (12) EUROPÄISCHE PATENTSCHRIFT

(45) Veröffentlichungstag und Bekanntmachung des Hinweises auf die Patenterteilung:
**27.05.2020   Patentblatt 2020/22**

(21) Anmeldenummer: **15197279.1**

(22) Anmeldetag: **01.12.2015**

(51) Int Cl.:
*B29C 48/76* *(2019.01)*   *B29C 48/285* *(2019.01)*
*B29C 48/92* *(2019.01)*   *B29B 7/48* *(2006.01)*
*B29B 7/84* *(2006.01)*   B29K 421/00 *(2006.01)*
B29K 25/00 *(2006.01)*   B29K 407/00 *(2006.01)*
B29K 409/06 *(2006.01)*

(54) **VERFAHREN ZUR AUFBEREITUNG EINER STYROL-ACRYLNITRIL-SCHMELZE**

METHOD FOR PREPARING A STYRENE ACRYLONITRILE MELT

PROCÉDÉ DE PRÉPARATION D'UNE FUSION DE STYRÈNE-ACRYLONITRILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.06.2017   Patentblatt 2017/23**

(73) Patentinhaber: **Coperion GmbH**
**70469 Stuttgart (DE)**

(72) Erfinder:
• **Lechner, Frank**
  **76227 Karlsruhe (DE)**
• **Sauer, Matthias**
  **70499 Stuttgart (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
EP-A1- 0 867 463     EP-A1- 2 353 839
EP-B1- 0 534 235     WO-A1-98/13412
WO-A1-2012/158582     US-A- 3 847 885

**Beschreibung**

Die Erfindung betrifft ein Verfahren zur Aufbereitung einer Styrol-Acrylnitril-Schmelze.

Aus der EP 0 534 235 B1 ist ein Verfahren zur Aufbereitung einer Styrol-Acrylnitril-Schmelze bekannt. Der in einem Hauptextruder befindlichen Styrol-Acrylnitril-Schmelze (SAN-Schmelze) wird über eine Einmischstelle ein teilentwässerter bzw. teilweise entwässerter Kautschuk zugemischt. Die Teilentwässerung des Kautschuks erfolgt mechanisch mittels eines Seitenextruders, der an der Einmischstelle in den Hauptextruder mündet. An Entgasungsstellen vor und nach der Einmischstelle wird aus der Styrol-Acrylnitril-Schmelze und dem teilentwässerten Kautschuk bzw. deren Mischung weiteres Wasser entfernt. Die Mischung wird anschließend über eine Lochdüse ausgetragen, gekühlt und granuliert. Durch das Mischen der Styrol-Acrylnitril-Schmelze und des teilentwässerten Kautschuks wird die Schlagzähigkeit des erzeugten thermoplastischen Kunststoffs modifiziert.

Aus der WO 2012/158 582 A1 ist ein Verfahren zur Aufbereitung einer Styrol-Acrylnitril-Schmelze bekannt. Einem Extruder wird Styrol-Acrylnitril-Granulat zugeführt und anschließend aufgeschmolzen. Dem Styrol-Acrylnitril-Granulat wird Acrylnitril-Butadien-Styrol mit einem Wassergehalt zwischen 20 % und 30 % zugeführt, das in einer Zentrifuge entwässert wurde. Das Styrol-Acrylnitril-Granulat wird anschließend zusammen mit dem Acrylnitril-Butadien-Styrol aufgeschmolzen und in dem Extruder weiter entwässert.

Aus der EP 0 867 463 A1 ist ein Verfahren zur Herstellung von elastomermodifizierten Thermoplasten durch Mischen von Kautschuk mit einem thermoplastischen Kunststoff bekannt. Das Elastomer wird auf 1 bis 50 Gew.-% Restfeuchte entwässert und in den als Schmelze vorliegenden thermoplastischen Kunststoff eingemischt.

Aus der WO 98/13412 A1 ist ein Verfahren zur Herstellung von schlagzäh modifizierten Thermoplasten mittels eines Extruders bekannt.

Aus der EP 2 353 839 A1 ist ein Verfahren zur Entgasung von Polymerschmelzen bekannt.

Der Erfindung liegt die Aufgabe zugrunde, ein Verfahren zu schaffen, das eine einfache und schonende Aufbereitung einer Styrol-Acrylnitril-Schmelze ermöglicht. Das Verfahren soll insbesondere in einfacher und genauer Weise die Herstellung einer Mischung aus der Styrol-Acrylnitril-Schmelze und Kautschuk in einem gewünschten Mischungsverhältnis ermöglichen.

Diese Aufgabe wird durch ein Verfahren mit den Merkmalen des Anspruchs 1 gelöst. Der Styrol-Acrylnitril-Schmelze wird mittels einer Dosiereinrichtung bereits teilweise entwässerter bzw. entwässerter Kautschuk dosiert zugeführt. Hierzu wird der teilweise entwässerte Kautschuk in die Dosiereinrichtung zugeführt und von dort in die in der Schneckenmaschine befindliche Styrol-Acrylnitril-Schmelze zugeführt. Die Bereitstellung des teilweise entwässerten Kautschuks erfolgt vor dem Zuführen in die Dosiereinrichtung. Der Kautschuk ist also vorentwässert. Die Bereitstellung erfolgt beispielsweise dadurch, dass die Teilentwässerung bzw. Entwässerung des Kautschuks bereits bei der Herstellung oder in einem vorgelagerten Verfahrensschritt erfolgt. Beispielsweise wird der teilweise entwässerte Kautschuk bereitgestellt, indem der Kautschuk in einer separaten Schneckenmaschine entwässert wird. Dadurch, dass bereits teilweise entwässerter Kautschuk in die Dosiereinrichtung und mittels der Dosiereinrichtung in die Styrol-Acrylnitril-Schmelze zugeführt wird, wird die Styrol-Acrylnitril-Schmelze in Folge der niedrigen Temperatur des teilweise entwässerten Kautschuks abgekühlt, sodass die nachfolgende Aufbereitung der Mischung aus der Styrol-Acrylnitril-Schmelze und dem Kautschuk äußerst schonend erfolgen kann. Ein zur Verfügung stehendes Temperatur-Betriebsfenster und/oder Drehzahl-Betriebsfenster bis zur Zersetzungstemperatur der gebildeten Mischung ist im Vergleich zum Stand der Technik größer. Weiterhin kann der teilweise entwässerte Kautschuk einfach und genau dosiert werden, wodurch in einfacher Weise die Herstellung einer Mischung aus der Styrol-Acrylnitril-Schmelze und dem teilweise entwässerten Kautschuk in einem gewünschten Mischungsverhältnis möglich ist. Die gebildete Mischung bzw. der thermoplastische Kunststoff weist hierdurch insbesondere eine in gewünschter Weise modifizierte Schlagzähigkeit auf. Der Aufwand für die Bereitstellung des teilweise entwässerten Kautschuks wird durch die Vorteile der genauen Dosierung des Kautschuks und der schonenden Aufbereitung der Mischung überkompensiert. Das Verfahren gewährleistete eine schonende Aufbereitung der Mischung aus der Styrol-Acrylnitril-Schmelze und dem teilweise entwässerten Kautschuk. Dadurch, dass die Temperatur des teilweise entwässerten Kautschuks bei Zuführung in die Styrol-Acrylnitril-Schmelze gering ist, wird die Temperatur der Styrol-Acrylnitril-Schmelze in vorteilhafter Weise erniedrigt. Für die nachfolgende Aufbereitung der Mischung steht ein vergleichsweise großes Temperatur-Betriebsfenster und/oder Drehzahl-Betriebsfenster zur Verfügung.

Je geringer der Wassergehalt des teilweise entwässerten Kautschuks bei Zuführung in die Dosiereinrichtung ist, desto weniger Wasser muss mittels der Schneckenmaschine noch entfernt werden. Dadurch, dass mittels der Schneckenmaschine vergleichsweise wenig Wasser entfernt werden muss, wird die Aufbereitung einfacher und schonender. Der Wassergehalt des teilweise entwässerten Kautschuks liegt bei Zuführung in die Dosiereinrichtung unter 18 Gew.-%, vorzugsweise zwischen 0,5 Gew.-% und 18 Gew.-%. Der Wassergehalt des teilweise entwässerten Kautschuks liegt bei Zuführung in die Dosiereinrichtung insbesondere zwischen 1 Gew.-% und 18 Gew.-%, insbesondere zwischen 2 Gew.-% und 18 Gew.-%, und insbesondere zwischen 5 Gew.-% und 15 Gew.-%. Dadurch, dass der teilweise entwässerte Kautschuk mittels der Dosiereinrichtung lediglich der Styrol-Acrylnitril-Schmelze dosiert zugeführt und im Wesentlichen nicht entwässert wird, ist die relative Wassergehaltänderung in der Dosiereinrichtung äußerst gering. Dadurch, dass in der Dosiereinrichtung im Wesentlichen keine Entwässerung stattfindet, weist der teilweise entwässerte Kautschuk bei Zuführung in die Styrol-Acrylnitril-Schmelze eine niedrige Temperatur auf, wodurch die Temperatur der Styrol-Acrylnitril-Schmelze in vorteilhafter Weise erniedrigt wird. Zudem ist eine genaue Dosierung des teilweise entwässerten Kautschuks gewährleistet.

Die Schneckenmaschine ist insbesondere als gleichsinnig drehantreibbare und dicht kämmende Mehrwellen-Schneckenmaschine, insbesondere Zweiwellen-Schneckenmaschine ausgebildet. Als Kautschuk kann Naturkautschuk und/oder Synthesekautschuk eingesetzt werden. Als Synthesekautschuk kann beispielsweise Acrylnitril-Butadien-Styrol (ABS) eingesetzt werden.

Ein Verfahren nach Anspruch 2 gewährleistet eine einfache und schonende Aufbereitung der Styrol-Acrylnitril-Schmelze.

Ein Verfahren nach Anspruch 3 gewährleistet eine einfache und genaue Zuführung des Kautschuks. Das Schüttgut kann beispielsweise ein Pulver und/oder ein Granulat sein. Der teilweise entwässerte Kautschuk wird insbesondere pulverförmig zugeführt.

Ein Verfahren nach Anspruch 4 gewährleistet eine schonende Aufbereitung der Mischung aus der Styrol-Acrylnitril-Schmelze und dem teilweise entwässerten Kautschuk. Dadurch, dass die Dosiereinrichtung lediglich zum dosierten Zuführen des teilweise entwässerten Kautschuks dient, ist die Temperaturdifferenz $\Delta T_K$ des teilweise entwässerten Kautschuks in der Dosiereinrichtung gering. Dadurch, dass die Temperatur des teilweise entwässerten Kautschuks in der Dosiereinrichtung kaum erhöht wird, ist diese bei Zuführung des Kautschuks in die Styrol-Acrylnitril-Schmelze gering, wodurch die Temperatur der Styrol-Acrylnitril-Schmelze in vorteilhafter Weise erniedrigt wird.

Ein Verfahren nach Anspruch 5 gewährleistet eine schonende Aufbereitung der Mischung aus der Styrol-Acrylnitril-Schmelze und dem teilweise entwässerten Kautschuk.

Ein Verfahren nach Anspruch 6 gewährleistet eine schonende Aufbereitung der Mischung aus der Styrol-Acrylnitril-Schmelze und dem teilweise entwässerten Kautschuk. Dadurch, dass die Styrol-Acrylnitril-Schmelze durch das Zuführen des teilweise entwässerten Kautschuks erheblich abgekühlt wird, steht für das Einmischen des Kautschuks in die Styrol-Acrylnitril-Schmelze ein großes Temperatur-Betriebsfenster und/oder Drehzahl-Betriebsfenster zur Verfügung.

Ein Verfahren nach Anspruch 7 gewährleistet eine schonende Aufbereitung der Mischung. Dadurch, dass die Styrol-Acrylnitril-Schmelze durch das Zuführen des teilweise entwässerten Kautschuks erheblich abgekühlt wird, erreicht die Mischung eine vergleichsweise niedrige Maximal-Temperatur, wodurch die schonende Aufbereitung gewährleistet ist.

Ein Verfahren nach Anspruch 8 gewährleistet in einfacher Weise eine Zuführung des teilweise entwässerten Kautschuks in die Styrol-Acrylnitril-Schmelze. Die Zuführschneckenmaschine ermöglicht in einfacher Weise eine Dosierung des in Form von Schüttgut vorliegenden teilweise entwässerten Kautschuks. Die Zuführschneckenmaschine ist vorzugsweise als dicht kämmende zweiwellige Seitenbeschickungsmaschine ausgebildet, die insbesondere gleichsinnig drehangetrieben ist. Dadurch, dass die Seitenbeschickungsmaschine dicht kämmend ausgebildet ist, wird eine totraumfreie Förderung des Schüttguts bei gleichzeitiger Selbstreinigung ermöglicht.

Ein Verfahren nach Anspruch 9 gewährleistet in einfacher Weise eine genaue Dosierung des teilweise entwässerten Kautschuks. Durch das Verhältnis $L_Z/D_{Za}$ wird einerseits der Platzbedarf der Zuführschneckenmaschine begrenzt, wodurch eine einfache Zuführung des teilweise entwässerten Kautschuks gewährleistet ist. Andererseits wird durch das Verhältnis $L_Z/D_{Za}$ eine zuverlässige und genaue Zuführung des teilweise entwässerten Kautschuks gewährleistet.

Ein Verfahren nach Anspruch 10 gewährleistet in einfacher Weise eine genaue Dosierung des teilweise entwässerten Kautschuks. Die gravimetrische Dosiereinheit gewährleistet eine exakte Zuführung des teilweise entwässerten Kautschuks in die Styrol-Acrylnitril-Schmelze bzw. in die Zuführschneckenmaschine. Der teilweise entwässerte Kautschuk wird der gravimetrischen Dosiereinheit insbesondere als Schüttgut zugeführt.

Ein Verfahren nach Anspruch 11 gewährleistet in einfacher Weise eine Abführung von Wasser aus der Schneckenmaschine bzw. aus der Mischung aus der Styrol-Acrylnitril-Schmelze und dem teilweise entwässerten Kautschuk. Durch das Zuführen des teilweise entwässerten Kautschuks in die Styrol-Acrylnitril-Schmelze wird die Temperatur des teilweise entwässerten Kautschuks erhöht, wodurch weiteres Wasser aus dem Kautschuk entweicht und dessen Wassergehalt reduziert wird. Der erzeugte Wasserdampf kann über die erste Entgasungseinrichtung entweichen. Da die erste Entgasungseinrichtung stromaufwärts zu der Zuführstelle angeordnet ist, stellt diese eine Rückwärts-Entgasung bereit. Die erste Entgasungseinrichtung kann beispielsweise als einwellige oder zweiwellige Seitenentgasungsmaschine oder als an der Schneckenmaschine angeordneter Ein- oder Doppelschnecken-Entgasungsstutzen oder als an einer Oberseite der Schneckenmaschine angeordneter Entgasungsdom ausgebildet sein.

Ein Verfahren nach Anspruch 12 gewährleistet in einfacher Weise eine Abführung von Wasser aus der Schneckenmaschine bzw. der Mischung aus der Styrol-Acrylnitril-Schmelze und dem teilweise entwässerten Kautschuk. Bei der Aufbereitung der Mischung stromabwärts der Zuführstelle entweicht weiteres Wasser aus der Mischung. Der Wasserdampf kann mittels der mindestens einen weiteren Entgasungseinrichtung aus der Schneckenmaschine entweichen. Vorzugsweise sind stromabwärts der Zuführstelle zwei Entgasungseinrichtungen angeordnet, die eine zweite und eine dritte Entgasungseinrichtung ausbilden. Die stromabwärts zu der Zuführstelle angeordnete mindestens eine weitere Entgasungseinrichtung bildet eine Vorwärts-Entgasung aus. Die mindestens eine weitere Entgasungseinrichtung kann als einwellige oder zweiwellige Seitenentgasungsmaschine oder als an der Schneckenmaschine angeordneter Ein- oder Doppelschnecken-Entgasungsstutzen oder als an einer Oberseite der Schneckenmaschine angeordneter Entgasungsdom ausgebildet sein.

Ein Verfahren nach Anspruch 13 gewährleistet eine schonende Aufbereitung der Styrol-Acrylnitril-Schmelze. Durch den Anteil an teilweise entwässertem Kautschuk wird die Styrol-Acrylnitril-Schmelze einerseits in gewünschter Weise modifiziert und andererseits gekühlt, wodurch eine schonende Aufbereitung gewährleistet ist.

Weitere Merkmale, Vorteile und Einzelheiten der Erfindung ergeben sich aus der nachfolgenden Beschreibung mehrerer Ausführungsbeispiele. Es zeigen:

Fig. 1    eine teilweise geschnitten dargestellte Aufbereitungsanlage zur Aufbereitung einer Styrol-Acrylnitril-Schmelze gemäß einem ersten Ausführungsbeispiel,

Fig. 2    eine teilweise geschnittene Draufsicht auf die Aufbereitungsanlage in Fig. 1, und

Fig. 3    eine teilweise geschnittene Draufsicht auf eine Aufbereitungsanlage zur Aufbereitung einer Styrol-Acrylnitril-Schmelze gemäß einem zweiten Ausführungsbeispiel.

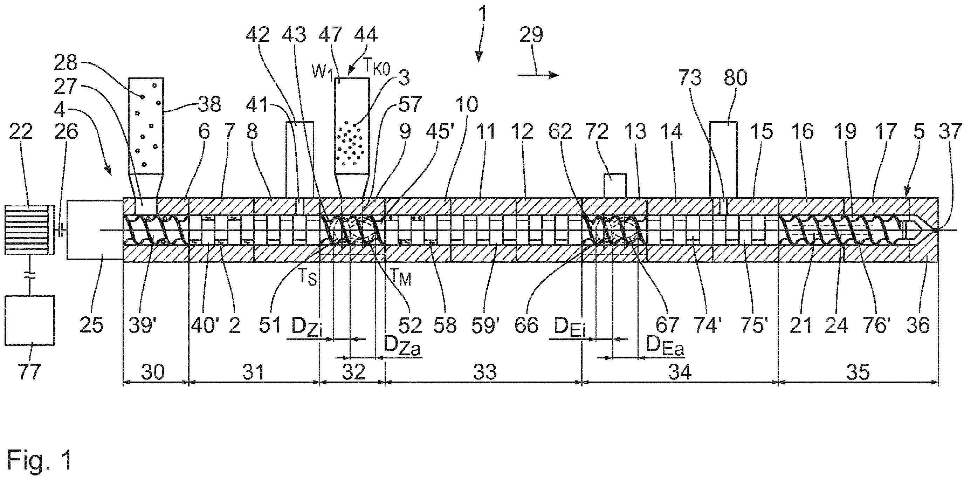

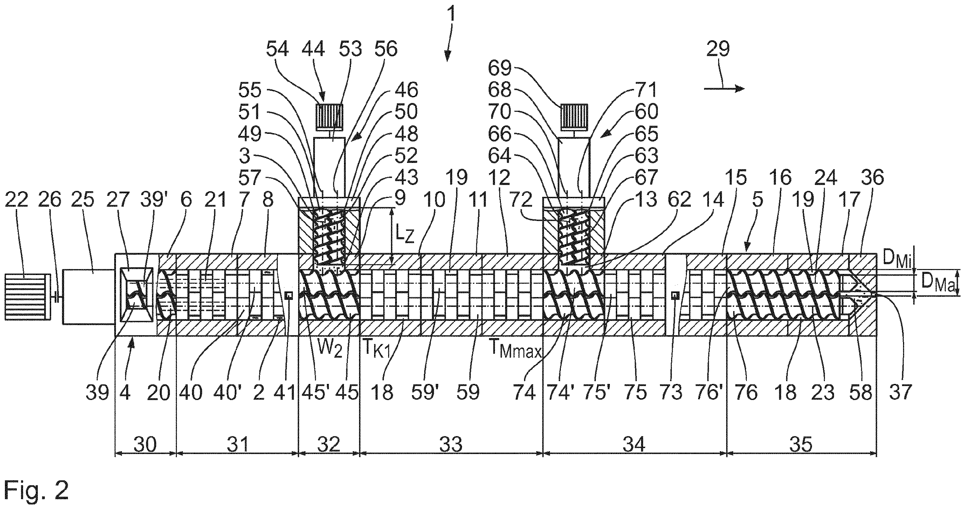

Nachfolgend ist anhand der Fig. 1 und 2 ein erstes Ausführungsbeispiel der Erfindung beschrieben. Eine Aufbereitungsanlage 1 dient zur Aufbereitung einer Styrol-Acrylnitril-Schmelze 2 (SAN-Schmelze) durch Einmischen eines teilweise entwässerten Kautschuks 3.

Die Aufbereitungsanlage 1 umfasst eine Mehrwellen-Schneckenmaschine 4, die ein Gehäuse 5 aus mehreren nacheinander angeordneten und als Gehäuseschüssen bezeichneten Gehäuseabschnitten 6 bis 17 aufweist. Die Gehäuseabschnitte 6 bis 17 sind zur Ausbildung des Gehäuses 5 miteinander verbunden.

In dem Gehäuse 5 sind zwei zueinander parallele und einander durchdringende Gehäusebohrungen 18, 19 ausgebildet, die im Querschnitt die Form einer liegenden Acht haben. In den Gehäusebohrungen 18, 19 sind konzentrisch zwei Wellen 20, 21 angeordnet, die von einem Antriebsmotor 22 um zugehörige Drehachsen 23, 24 drehantreibbar sind. Zwischen den Wellen 20, 21 und dem Antriebsmotor 22 ist ein Verzweigungsgetriebe 25 angeordnet, wobei wiederum zwischen dem Antriebsmotor 22 und dem Verzweigungsgetriebe 25 eine Kupplung 26 angeordnet ist. Die Wellen 20, 21 werden gleichsinnig, also in gleichen Drehrichtungen um die Drehachsen 23, 24 angetrieben.

In dem dem Verzweigungsgetriebe 25 benachbarten ersten Gehäuseabschnitt 6 ist eine erste Zuführöffnung 27 ausgebildet, durch die ein Styrol-Acrylnitril-Granulat 28 in die Gehäusebohrungen 18, 19 einführbar ist. Die Schneckenmaschine 4 weist in einer Förderrichtung 29 nacheinander eine Einzugszone 30, eine Aufschmelzzone 31, eine Zuführzone 32, eine Mischzone 33, eine Entgasungszone 34 und eine Austragszone 35 auf. An dem letzten Gehäuseabschnitt 17 ist eine das Gehäuse 5 abschließende Düsenplatte 36 angeordnet, die eine Austragsöffnung 37 ausbildet.

Zum Zuführen des Styrol-Acrylnitril-Granulats 28 mündet eine erste gravimetrische Dosiereinheit 38 in die erste Zuführöffnung 27. In der Einzugszone 30 sind auf den Wellen 20, 21 Schneckenelemente 39, 39' drehfest angeordnet, die das Styrol-Acrylnitril-Granulat 28 zu der Aufschmelzzone 31 fördern. Zum Aufschmelzen des Styrol-Acrylnitril-Granulats 28 sind in der Aufschmelzzone 31 Knetelemente 40, 40' drehfest auf den Wellen 20, 21 angeordnet.

In dem der Zuführzone 32 vorgeordneten Gehäuseabschnitt 8 ist eine erste Entgasungsöffnung 41 ausgebildet. An der ersten Entgasungsöffnung 41 ist eine erste Entgasungseinrichtung 42 angeschlossen. Die erste Entgasungseinrichtung 42 ist beispielsweise als Vakuum-Entgasungsdom ausgebildet. Die erste Entgasungseinrichtung 42 ist stromaufwärts zu einer Zuführstelle des teilweise entwässerten Kautschuks 3 angeordnet und bildet somit eine Rückwärts-Entgasung aus. Die erste Entgasungseinrichtung 42 dient zum Abführen von Wasserdampf.

Zur Zuführung von teilweise entwässertem Kautschuk 3 mündet eine Dosiereinrichtung 44 in der Zuführzone 32 in die Schneckenmaschine 4. Hierzu sind in dem Gehäuseabschnitt 9 zwei seitliche Durchgangsbohrungen ausgebildet, die im Querschnitt die Form einer liegenden Acht haben und in die Gehäusebohrung 19 münden. Die Durchgangsbohrungen bilden eine zweite Zuführöffnung 43 aus. In der Zuführzone 32 sind Schneckenelemente 45, 45' drehfest auf den Wellen 20, 21 angeordnet. Die Styrol-Acrylnitril-Schmelze 2 und der zugeführte teilweise entwässerte Kautschuk 3 werden mittels der Schneckenelemente 45, 45' zu der Mischzone 33 gefördert.

Die Dosiereinrichtung 44 weist eine Zuführschneckenmaschine 46 und eine zweite gravimetrische Dosiereinheit 47 auf. Die Zuführschneckenmaschine 46 umfasst ein Gehäuse 48 mit zwei Gehäusebohrungen 49, 50. In den Gehäusebohrungen 49, 50 sind zwei Schneckenwellen 51, 52 angeordnet, die über ein Verzweigungsgetriebe 53 mittels eines Antriebsmotors 54 um zugehörige Drehachsen 55, 56 gleichsinnig drehantreibbar sind. Die Schneckenwellen 51, 52 münden in die zweite Zuführöffnung 43. Die Zuführschneckenmaschine 46 ist als Seitenbeschickungsmaschine ausgebildet und seitlich an dem Gehäuse 5 befestigt. In dem Gehäuse 48 ist eine dritte Zuführöffnung 57 ausgebildet, in die die zweite gravimetrische Dosiereinheit 47 mündet.

In der Mischzone 33 sind zur Herstellung einer Mischung 58 aus der Styrol-Acrylnitril-Schmelze 2 und dem teilweise entwässerten Kautschuk 3 Knetelemente 59, 59' drehfest auf den Wellen 20, 21 angeordnet. Zum Abführen von Wasserdampf aus der Mischung 58 sind in der Entgasungszone 34 eine zweite Entgasungseinrichtung 60 und eine dritte Entgasungseinrichtung 61 an der Schneckenmaschine 4 angeordnet. Die Entgasungseinrichtungen 60, 61 sind stromabwärts zu der Zuführstelle angeordnet und bilden somit jeweils eine Vorwärts-Entgasung aus. Die zweite Entgasungseinrichtung 60 ist als Seitenentgasungsmaschine ausgebildet. Hierzu ist seitlich in dem Gehäuseabschnitt 13 eine zweite Entgasungsöffnung 62 ausgebildet. Die Seitenentgasungsmaschine 60 umfasst ein Gehäuse 63 mit zwei Gehäusebohrungen 64, 65, in denen zwei Schneckenwellen 66, 67 angeordnet und über ein Verzweigungsgetriebe 68 mittels eines Antriebsmotors 69 um zugehörige Drehachsen 70, 71 gleichsinnig drehantreibbar sind. Die Schneckenwellen 66, 67 münden in die zweite Entgasungsöffnung 62 und dienen zum Zurückhalten der Mischung 58 in den Gehäusebohrungen 18, 19. In das Gehäuse 63 mündet ein Vakuum-Anschluss 72, der zum Absaugen von Wasserdampf dient.

Die dritte Entgasungseinrichtung 61 ist stromabwärts zu der zweiten Entgasungseinrichtung 60 angeordnet. Die dritte Entgasungseinrichtung 61 ist als Vakuum-Entgasungsdom ausgebildet. Hierzu ist in dem Gehäuseabschnitt 15 eine dritte Entgasungsöffnung 73 ausgebildet, an der die dritte Entgasungseinrichtung 61 angeschlossen ist. Die dritte Entgasungseinrichtung 61 dient zum Abführen von Wasserdampf aus der Mischung 58. In der Entgasungszone 34 sind Schneckenelemente 74, 74' und Knetelemente 75, 75' drehfest auf den Wellen 20, 21 befestigt.

In der nachgeordneten Austragszone 35 sind Schneckenelemente 76, 76' auf den Wellen 20, 21 drehfest angeordnet, die zum Druckaufbau und zum Austragen der Mischung 58 aus der Austragsöffnung 37 dienen.

Die Knetelemente 40, 40', 59, 59', 75, 75' sind beispielsweise als einzelne Knetscheiben oder als mindestens ein Knetblock mit mehreren einstückig miteinander verbundenen Knetscheiben ausgebildet.

Zur Steuerung der Aufbereitungsanlage 1 weist diese eine Steuereinrichtung 77 auf. Eine Drehzahl der Mehrwellen-Schneckenmaschine 4 ist mittels der Steuereinrichtung 77 von 50 1/min bis 1200 1/min, insbesondere von 150 1/min bis 800 1/min einstellbar.

Die Mehrwellen-Schneckenmaschine 4 weist einen Außendurchmesser $D_{Ma}$ und einen Kerndurchmesser $D_{Mi}$ der Schnecken- bzw. Knetelemente auf. Für den Außendurchmesser $D_{Ma}$ gilt: 16 mm $\leq D_{Ma} \leq$ 200 mm. Für das Verhältnis $D_{Ma}/D_{Mi}$ gilt: 1,22 $\leq D_{Ma}/D_{Mi} \leq$ 1,9, insbesondere 1,4 $\leq D_{Ma}/D_{Mi} \leq$ 1,8.

Die Schneckenwellen 51, 52 der Zuführschneckenmaschine 46 weisen einen Außendurchmesser $D_{Za}$ und einen Kerndurchmesser $D_{Zi}$ auf. Für den Außendurchmesser $D_{Za}$ gilt: 0,25 · $D_{Ma} \leq D_{Za} \leq$ 2,0 · $D_{Ma}$. Ferner gilt für das Verhältnis $D_{Za}/D_{Zi}$: 1,36 $\leq D_{Za}/D_{Zi} \leq$ 2,0. Die Schneckenwellen 51, 52 weisen eine Länge $L_Z$ auf, wobei für das Verhältnis $L_Z/D_{Za}$ gilt: 2 $\leq L_Z/D_{Za} \leq$ 32, und insbesondere 4 $\leq L_Z/D_{Za} \leq$ 16.

Die Schneckenwellen 66, 67 der Seitenentgasungsmaschine 60 weisen einen Außendurchmesser $D_{Ea}$ und einen Kerndurchmesser $D_{Ei}$ auf. Für den Außendurchmesser $D_{Ea}$ gilt: 0,25 · $D_{Ma} \leq D_{Ea} \leq$ 2,0 · $D_{Ma}$. Ferner gilt für das Verhältnis $D_{Ea}/D_{Ei}$: 1,36 $\leq D_{Ea}/D_{Ei} \leq$ 2,0.

Die Funktionsweise der Aufbereitungsanlage 1 ist wie folgt:
Mittels der gravimetrischen Dosiereinheit 38 wird Styrol-Acrylnitril-Granulat 28 als Schüttgut durch die erste Zuführöffnung 27 der Schneckenmaschine 4 zugeführt. In der Einzugszone 30 wird das Styrol-Acrylnitril-Granulat 28 zu der Aufschmelzzone 31 gefördert, wo das Styrol-Acrylnitril-Granulat 28 aufgeschmolzen wird.

In der Zuführzone 32 wird der gebildeten Styrol-Acrylnitril-Schmelze 2 der teilweise entwässerte Kautschuk 3 zugeführt. Der teilweise entwässerte Kautschuk 3 wird mittels der gravimetrischen Dosiereinheit 47 der Zuführschneckenmaschine 46 zugeführt, die den Kautschuk 3 durch die zweite Zuführöffnung 43 in die Gehäusebohrungen 18, 19 fördert. Der teilweise entwässerte Kautschuk 3 wird der Dosiereinrichtung 44 und der Styrol-Acrylnitril-Schmelze 2 als Schüttgut zugeführt. Der teilweise entwässerte Kautschuk 3 ist insbesondere als Granulat und/oder Pulver ausgebildet. Der teilweise entwässerte Kautschuk 3 weist bei Zuführung in die Dosiereinrichtung 44 einen ersten Wassergehalt Wi von höchstens 18 Gew.-% auf. Bei Abführung aus der Dosiereinrichtung 44 weist der teilweise entwässerte Kautschuk einen zweiten Wassergehalt $W_2$ auf, wobei für eine relative Wassergehaltänderung $\Delta W = \dfrac{W_2 - W_1}{W_1}$ betragsmäßig gilt: 0 % $\leq |\Delta W| \leq$ 2 %, insbesondere 0,1 % $\leq |\Delta W| \leq$ 1 %, und insbesondere 0,2 % $\leq |\Delta W| \leq$ 0,5 %.

Da der teilweise entwässerte Kautschuk 3 bereits vor Zuführung in die Dosiereinrichtung 44 vorentwässert wurde, also einen niedrigen Wassergehalt Wi hat, wird der teilweise entwässerte Kautschuk 3 mittels der Dosiereinrichtung 44 der Styrol-Acrylnitril-Schmelze 2 lediglich dosiert zugeführt und in der Dosiereinrichtung 44 im Wesentlichen nicht weiter entwässert. Die Entwässerung des Kautschuks 3 erfolgte in einem vorgelagerten separaten Herstellungs- und/oder Aufbereitungsschritt, beispielsweise bei der Herstellung des Kautschuks 3 und/oder bei einer vorgelagerten mechanischen Entwässerung mittels einer separaten Schneckenmaschine. Dadurch, dass der teilweise entwässerte Kautschuk 3 mittels der Dosiereinrichtung 44 lediglich der Styrol-Acrylnitril-Schmelze 2 zugeführt wird, wird kaum Energie in den teilweise entwässerten Kautschuk 3 eingebracht.

Der teilweise entwässerte Kautschuk 3 weist bei Zuführung in die Dosiereinrichtung 44 eine Temperatur $T_{K0}$ und bei Zuführung in die Styrol-Acrylnitril-Schmelze 2 eine Temperatur $T_{K1}$ auf, wobei für eine Temperaturdifferenz $\Delta T_K = T_{K1} - T_{K0}$ gilt: $\Delta T_K \leq 40\ °C$, insbesondere $\Delta T_K \leq 30\ °C$, und insbesondere $\Delta T_K \leq 20\ °C$. Weiterhin gilt für die Temperatur $T_{K1}$: $T_{K1} \leq 60\ °C$, insbesondere $T_{K1} \leq 50\ °C$, und insbesondere $T_{K1} \leq 40\ °C$.

Dadurch, dass der teilweise entwässerte Kautschuk 3 bei Zuführung in die Styrol-Acrylnitril-Schmelze 2 eine geringe Temperatur $T_{K1}$ hat, wird die Styrol-Acrylnitril-Schmelze 2 durch das Zuführen des teilweise entwässerten Kautschuks 3 abgekühlt. Die Styrol-Acrylnitril-Schmelze 2 hat vor der Zuführstelle eine Temperatur $T_S$ und nach der Zuführstelle in der Mischung 58 eine Temperatur $T_M$. Durch das Zuführen des teilweise entwässerten Kautschuks 3 wird die Styrol-Acrylnitril-Schmelze 2 um eine Temperatur $\Delta T_S = T_S - T_M$ abgekühlt, wobei für $\Delta T_S$ gilt: $\Delta T_S \geq 10\ °C$, insbesondere $\Delta T_S \geq 20\ °C$, und insbesondere $\Delta T_S \geq 40\ °C$.

An der Zuführstelle hat der teilweise entwässerte Kautschuk 3 in der gebildeten Mischung 58 einen Anteil von 5 Gew.-% bis 35 Gew.-%, insbesondere von 10 Gew.-% bis 30 Gew.-%, und insbesondere von 15 Gew.-% bis 25 Gew.-%.

Demgegenüber wird die Temperatur $T_{K1}$ des teilweise entwässerten Kautschuks 3 durch das Zuführen in die Styrol-Acrylnitril-Schmelze 2 erhöht, wobei restliches Wasser aus dem teilweise entwässerten Kautschuk 3 verdampft. Der entstehende Wasserdampf entweicht durch die erste Entgasungsöffnung 41 und die erste Entgasungseinrichtung 42.

Der teilweise entwässerte Kautschuk 3 wird in der Mischzone 33 aufgeschmolzen und mit der Styrol-Acrylnitril-Schmelze 2 gemischt. Aus der Mischung 58 verdampft restliches Wasser. Der hierdurch entstehende Wasserdampf wird in der Entgasungszone 34 mittels der zweiten Entgasungseinrichtung 60 und der dritten Entgasungseinrichtung 61 durch die zweite Entgasungsöffnung 62 bzw. die dritte Entgasungsöffnung 73 abgeführt. Die Mischung 58 wird in der Austragszone 35 durch die Austragsöffnung 37 aus der Schneckenmaschine 4 abgeführt und beispielsweise einer Granuliervorrichtung zugeführt. Stromabwärts der Zuführstelle weist die Mischung 58 eine Maximal-Temperatur $T_{Mmax}$ auf, wobei für $T_{Mmax}$ gilt: $T_{Mmax} \leq 280\ °C$, insbesondere $T_{Mmax} \leq 250\ °C$, und insbesondere $T_{Mmax} \leq 220\ °C$.

Die erste Entgasungseinrichtung 42 erzeugt ein Vakuum im Bereich von 100 mbar bis 1013 mbar, insbesondere von 500 mbar bis 1013 mbar. Die mindestens eine weitere Entgasungseinrichtung 60, 61 erzeugt ein Vakuum im Bereich von 1 mbar bis 900 mbar, insbesondere von 20 mbar bis 300 mbar.

Der teilweise entwässerte Kautschuk 3 ist beispielsweise ein Naturkautschuk und/oder ein Synthesekautschuk. Vorzugsweise ist der teilweise entwässerte Kautschuk 3 ein Synthesekautschuk, beispielsweise Acrylnitril-Butadien-Styrol (ABS).

Dadurch, dass die Styrol-Acrylnitril-Schmelze 2 durch den teilweise entwässerten Kautschuk 3 abgekühlt wird, kann die Mischung 58 schonend aufbereitet werden. Der Energieverbrauch kann insgesamt gesenkt werden. Durch die Zuführung des teilweise entwässerten Kautschuks 3 kühlt die Styrol-Acrylnitril-Schmelze 2 aufgrund der Verdampfungsenthalpie ab, wodurch die Mischung 58 ein deutliches niedrigeres Temperaturprofil erreicht und somit schonender aufbereitet werden kann. Das Temperatur-Betriebsfenster und/oder das Drehzahl-Betriebsfenster für das Mischen und das Dispergieren des teilweise entwässerten Kautschuks 3 in der Styrol-Acrylnitril-Schmelze 2 ist deutlich erweitert, sodass die Aufbereitung der Styrol-Acrylnitril-Schmelze 2 und die Herstellung der Mischung 58 vereinfacht ist. Die Herstellung der Mischung 58 ist durch den vergleichsweise geringeren Energieeintrag im Vergleich zum Stand der Technik energieeffizienter.

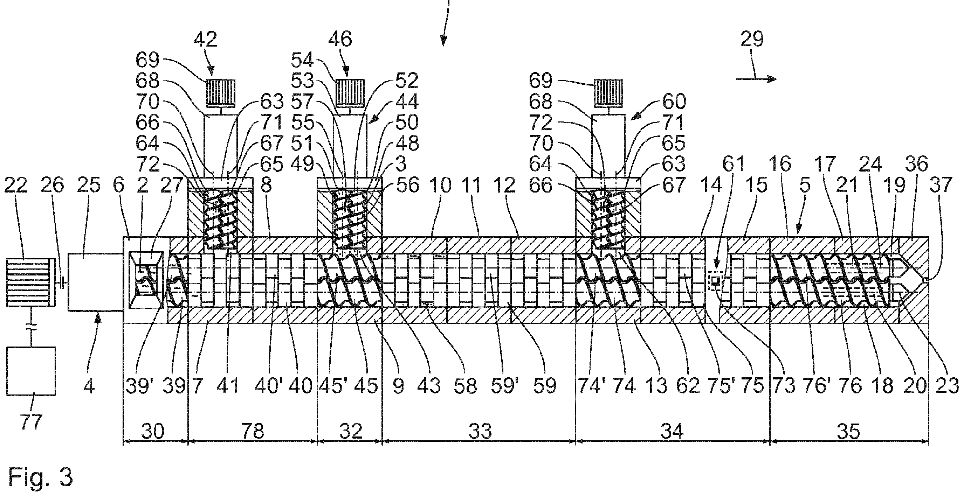

Nachfolgend ist anhand von Fig. 3 ein zweites Ausführungsbeispiel der Erfindung beschrieben. Im Unterschied zu dem ersten Ausführungsbeispiel wird durch die erste Zuführöffnung 27 die Styrol-Acrylnitril-Schmelze 2 zugeführt. In der Einzugszone 30 wird die Styrol-Acrylnitril-Schmelze 2 zu einer Entgasungszone 78 gefördert. In der Entgasungszone 78 ist seitlich die erste Entgasungsöffnung 41 ausgebildet. Die erste Entgasungseinrichtung 42 ist entsprechend der zweiten Entgasungseinrichtung 60 als Seitenentgasungsmaschine ausgebildet. Hinsichtlich des Aufbaus und der Funktionsweise der ersten Entgasungseinrichtung 42 wird auf die obige Beschreibung der zweiten Entgasungseinrichtung 60 verwiesen. In der Entgasungszone 78 verdampft Wasser aus der Styrol-Acrylnitril-Schmelze 2 und entweicht durch die erste Entgasungsöffnung 41 und die als Seitenentgasungsmaschine ausgebildete Entgasungseinrichtung 42. Der bereitgestellten Styrol-Acrylnitril-Schmelze 2 wird in der Zuführzone 32 in beschriebener Weise der teilweise entwässerte Kautschuk 3 zugeführt. Hinsichtlich des weiteren Aufbaus der Aufbereitungsanlage 1 und der Funktionsweise wird auf die Beschreibung des vorangegangenen Beispiels verwiesen.

## Patentansprüche

1. Verfahren zur Aufbereitung einer Styrol-Acrylnitril-Schmelze, umfassend folgende Schritte:

- Bereitstellen einer Schneckenmaschine (4) mit einer darin befindlichen Styrol-Acrylnitril-Schmelze (2),
- Bereitstellen eines teilweise entwässerten Kautschuks (3) und Zuführen des teilweise entwässerten Kautschuks (3) in eine Dosiereinrichtung (44), wobei der teilweise entwässerte Kautschuk (3) bei Zuführung in die Dosiereinrichtung (44) einen ersten Wassergehalt Wi von höchstens 18 Gew.-% hat,

- Zuführen des teilweise entwässerten Kautschuks (3) in die Styrol-Acrylnitril-Schmelze (2) mittels der Dosiereinrichtung (44), wobei der teilweise entwässerte Kautschuk (3) bei Abführung aus der Dosiereinrichtung (44) einen zweiten Wassergehalt $W_2$ hat und für eine relative

Wassergehaltänderung $\Delta W = \dfrac{W_2 - W_1}{W_1}$

betragsmäßig gilt: 0 % $\leq |\Delta W| \leq$ 2 %,
wobei der teilweise entwässerte Kautschuk (3) bei Zuführung in die Styrol-Acrylnitril-Schmelze (2) eine Temperatur $T_{K1}$ hat, wobei für $T_{K1}$ gilt: $T_{K1} \leq$ 60 °C, und
- Einmischen des teilweise entwässerten Kautschuks (3) und Entwässern einer aus der Styrol-Acrylnitril-Schmelze (2) und dem teilweise entwässerten Kautschuk (3) gebildeten Mischung (58) mittels der Schneckenmaschine (4).

2. Verfahren nach Anspruch 1, **dadurch gekennzeichnet,**
   **dass** für die relative Wassergehaltsänderung $\Delta W$ betragsmäßig gilt: 0,1 % $\leq |\Delta W| \leq$ 1 %, und insbesondere 0,2 % $\leq |\Delta W| \leq$ 0,5 %.

3. Verfahren nach Anspruch 1 oder 2, **dadurch gekennzeichnet,**
   **dass** der teilweise entwässerte Kautschuk (3) der Dosiereinrichtung (44) und insbesondere der Styrol-Acrylnitril-Schmelze (2) als Schüttgut zugeführt wird.

4. Verfahren nach einem der Ansprüche 1 bis 3, **dadurch gekennzeichnet,**
   **dass** der teilweise entwässerte Kautschuk (3) bei Zuführung in die Dosiereinrichtung (44) eine Temperatur $T_{K0}$ und bei Zuführung in die Styrol-Acrylnitril-Schmelze (2) die Temperatur $T_{K1}$ hat, wobei für eine Temperaturdifferenz $\Delta T_K = T_{K1} - T_{K0}$ gilt: $\Delta T_K \leq$ 40 °C, insbesondere $\Delta T_K \leq$ 30 °C, und insbesondere $\Delta T_K \leq$ 20 °C.

5. Verfahren nach einem der Ansprüche 1 bis 4, **dadurch gekennzeichnet,**
   **dass** $T_{K1} \leq$ 50 °C, und insbesondere $T_{K1} \leq$ 40 °C gilt.

6. Verfahren nach einem der Ansprüche 1 bis 5, **dadurch gekennzeichnet,**
   **dass** die Styrol-Acrylnitril-Schmelze (2) durch das Zuführen des teilweise entwässerten Kautschuks (3) um eine Temperatur $\Delta T_S$ abgekühlt wird, wobei für $\Delta T_S$ gilt: $\Delta T_S \geq$ 10 °C, insbesondere $\Delta T_S \geq$ 20 °C, und insbesondere $\Delta T_S \geq$ 40 °C.

7. Verfahren nach einem der Ansprüche 1 bis 6, **dadurch gekennzeichnet,**
   **dass** die Mischung (58) eine Maximal-Temperatur

$T_{Mmax}$ hat, wobei für $T_{Mmax}$ gilt: $T_{Mmax} \leq$ 280 °C, insbesondere $T_{Mmax} \leq$ 250 °C, und insbesondere $T_{Mmax} \leq$ 220 °C.

8. Verfahren nach einem der Ansprüche 1 bis 7, **dadurch gekennzeichnet,**
   **dass** die Dosiereinrichtung (44) eine Zuführschneckenmaschine (46) umfasst, die in die Schneckenmaschine (4) mündet und den teilweise entwässerten Kautschuk (3) der Styrol-Acrylnitril-Schmelze (2) zuführt.

9. Verfahren nach Anspruch 8, **dadurch gekennzeichnet,**
   **dass** die Zuführschneckenmaschine (46) mindestens eine Schneckenwelle (51, 52) mit einer Länge Lz und einem Durchmesser $D_{Za}$ umfasst, wobei für das Verhältnis $L_Z/D_{Za}$ gilt: 2 $\leq L_Z/D_{Za} \leq$ 32, und insbesondere 4 $\leq L_Z/D_{Za} \leq$ 16.

10. Verfahren nach einem der Ansprüche 1 bis 9, **dadurch gekennzeichnet,**
    **dass** die Dosiereinrichtung (44) eine gravimetrische Dosiereinheit (47) umfasst, die insbesondere der Zuführschneckenmaschine (46) vorgeordnet ist und den teilweise entwässerten Kautschuk (3) in die Zuführschneckenmaschine (46) dosiert.

11. Verfahren nach einem der Ansprüche 1 bis 10, **dadurch gekennzeichnet,**
    **dass** stromaufwärts zu einer Zuführstelle des teilweise entwässerten Kautschuks (3) eine erste Entgasungseinrichtung (42) an der Schneckenmaschine (4) angeordnet ist.

12. Verfahren nach Anspruch 11, **dadurch gekennzeichnet,**
    **dass** stromabwärts zu der Zuführstelle mindestens eine weitere Entgasungseinrichtung (60, 61) an der Schneckenmaschine (4) angeordnet ist.

13. Verfahren nach einem der Ansprüche 1 bis 12, **dadurch gekennzeichnet,**
    **dass** an einer Zuführstelle der teilweise entwässerte Kautschuk (3) in der gebildete Mischung (58) einen Anteil von 5 Gew.-% bis 35 Gew.-%, insbesondere von 10 Gew.-% bis 30 Gew.-%, und insbesondere von 15 Gew.-% bis 25 Gew.-% hat.

**Claims**

1. Process for the preparation of a styrene-acrylonitrile melt, comprising the following steps:

    - provision of a screw-based machine (4) with a styrene-acrylonitrile melt (2) located therein,
    - provision of a partially dewatered rubber (3) and introduction of the partially dewatered rubber (3) into metering equipment (44), where the partially dewatered rubber (3) has a first water content Wi of at most 18% by weight on introduction into the metering equipment (44),

- introduction of the partially dewatered rubber (3) into the styrene-acrylonitrile melt (2) by means of the metering equipment (44), where the partially dewatered rubber (3) has a second water content $W_2$ on withdrawal from the metering equipment (44) and the absolute value of a relative water-content change $\Delta W = \dfrac{W_2 - W_1}{W_1}$ complies with the condition: $0\% \leq |\Delta W| \leq 2\%$, where the partially dewatered rubber (3) has a temperature $T_{K1}$ on introduction into the styrene-acrylonitrile melt (2), where $T_{K1}$ complies with the condition: $T_{K1} \leq 60°C$, and

- mixing to incorporate the partially dewatered rubber (3) and dewatering of a mixture (58) formed from the styrene-acrylonitrile melt (2) and the partially dewatered rubber (3) by means of the screw-based machine (4).

2. Process according to Claim 1, **characterized in that** the absolute value of the relative water-content change $\Delta W$ complies with the condition: $0.1\% \leq |\Delta W| \leq 1\%$, and in particular $0.2\% \leq |\Delta W| \leq 0.5\%$.

3. Process according to Claim 1 or 2, **characterized in that** the form in which the partially dewatered rubber (3) is introduced into the metering equipment (44) and in particular into the styrene-acrylonitrile melt (2) is that of free-flowing solid.

4. Process according to any of Claims 1 to 3, **characterized in that** the partially dewatered rubber (3) has a temperature $T_{K0}$ on introduction into the metering equipment (44) and has the temperature $T_{K1}$ on introduction into the styrene-acrylonitrile melt (2), where a temperature difference $\Delta T_K = T_{K1} - T_{K0}$ complies with the condition: $\Delta T_K \leq 40°C$, in particular $\Delta T_K \leq 30°C$, and in particular $\Delta T_K \leq 20°C$.

5. Process according to any of Claims 1 to 4, **characterized in that** $T_{K1} \leq 50°C$, and in particular $T_{K1} \leq 40°C$.

6. Process according to any of Claims 1 to 5, **characterized in that** the styrene-acrylonitrile melt (2) is cooled by a temperature $\Delta T_S$ by the introduction of the partially dewatered rubber (3), where $\Delta T_S$ complies with the condition: $\Delta T_S \geq 10°C$, in particular $\Delta T_S \geq 20°C$, and in particular $\Delta T_S \geq 40°C$.

7. Process according to any of Claims 1 to 6, **characterized in that** the mixture (58) has a maximal temperature $T_{Mmax}$ where $T_{Mmax}$ complies with the condition: $T_{Mmax} \leq 280°C$, in particular $T_{Mmax} \leq 250°C$, and in particular $T_{Mmax} \leq 220°C$.

8. Process according to any of Claims 1 to 7, **characterized in that** the metering equipment (44) comprises a screw-feed machine (46) which leads into the screw-based machine (4) and introduces the partially dewatered rubber (3) into the styrene-acrylonitrile melt (2).

9. Process according to Claim 8, **characterized in that** the screw-feed machine (46) comprises at least one screw (51, 52) with a length Lz and a diameter $D_{Za}$, where the ratio $L_Z/D_{Za}$ complies with the condition: $2 \leq L_Z/D_{Za} \leq 32$, and in particular $4 \leq L_Z/D_{Za} \leq 16$.

10. Process according to any of Claims 1 to 9, **characterized in that** the metering equipment (44) comprises a gravimetric metering unit (47) which in particular precedes the screw-feed machine (46) and meters the partially dewatered rubber (3) into the screw-feed machine (46).

11. Process according to any of Claims 1 to 10, **characterized in that** arranged on the screw-based machine (4), upstream of a feed point for the partially dewatered rubber (3), there is a first devolatilization unit (42).

12. Process according to Claim 11, **characterized in that** arranged on the screw-based machine (4), downstream of the feed point, there is at least one further devolatilization unit (60, 61).

13. Process according to any of Claims 1 to 12, **characterized in that** at a feed point the proportion present of the partially dewatered rubber (3) in the mixture formed (58) is 5% by weight to 35% by weight, in particular 10% by weight to 30% by weight, and in particular 15% by weight to 25% by weight.

**Revendications**

1. Procédé de préparation d'une fusion de styrène-acrylonitrile, comprenant les étapes suivantes :

- fourniture à une machine à vis sans fin (4) d'une fusion de styrène-acrylonitrile (2) se trouvant dans celle-ci,
- fourniture d'un caoutchouc partiellement déshydraté (3) et acheminement du caoutchouc partiellement déshydraté (3) dans un dispositif de dosage (44), le caoutchouc partiellement déshydraté (3) présentant une première teneur en eau Wi d'au plus 18 % en poids lorsqu'il est acheminé dans le dispositif de dosage (44),

- l'acheminement du caoutchouc partiellement déshydraté (3) dans la fusion de styrène-acrylonitrile (2) au moyen du dispositif de dosage (44), le caoutchouc partiellement déshydraté (3) présentant une seconde teneur en eau $W_2$ lorsqu'il est évacué du dispositif de dosage (44) et, pour une variation relative de la teneur en eau

$$\Delta W = \frac{W_2 - W_1}{W_1},$$ $\Delta W$ ce qui suit s'applique en valeur : 0 % ≤ |ΔW| ≤ 2 %, le caoutchouc partiellement déshydraté (3) présentant une température $T_{K1}$ lorsqu'il est acheminé dans la fusion de styrène-acrylonitrile (2), $T_{K1} \le 60$ °C s'appliquant pour $T_{K1}$, et

- mélange du caoutchouc partiellement déshydraté (3) et déshydratation d'un mélange (58) formé à partir de la fusion de styrène-acrylonitrile (2) et du caoutchouc partiellement déshydraté (3) au moyen de la machine à vis sans fin (4).

2. Procédé selon la revendication 1, **caractérisé en ce que,** pour la variation relative de la teneur en eau ΔW, ce qui suit s'applique en valeur :
0,1 % ≤ |ΔW| ≤ 1 %, et en particulier 0,2 % ≤ |ΔW| ≤ 0,5 %.

3. Procédé selon la revendication 1 ou 2, **caractérisé en ce que** le caoutchouc partiellement déshydraté (3) est acheminé sous forme de matière en vrac dans le dispositif de dosage (44) et en particulier dans la fusion de styrène-acrylonitrile (2).

4. Procédé selon l'une des revendications 1 à 3, **caractérisé en ce que** le caoutchouc partiellement déshydraté (3) a une température $T_{K0}$ lorsqu'il est acheminé dans le dispositif de dosage (44), et a la température $T_{K1}$ lorsqu'il est acheminé dans la fusion de styrène-acrylonitrile (2), dans lequel, pour une différence de température $\Delta T_K = T_{K1} - T_{K0}$, ce qui suit s'applique :
$\Delta T_K \le 40$ °C, en particulier $\Delta T_K \le 30$ °C, et en particulier $\Delta T_K \le 20$ °C.

5. Procédé selon l'une des revendications 1 à 4, **caractérisé en ce que** $T_{K1} \le 50$ °C, et en particulier $T_{K1} \le 40$ °C s'applique.

6. Procédé selon l'une des revendications 1 à 5, **caractérisé en ce que** la fusion de styrène-acrylonitrile (2) est refroidie à une température $\Delta T_S$ par l'acheminement du caoutchouc partiellement déshydraté (3), dans lequel, pour $\Delta T_S$, ce qui suit s'applique :
$\Delta T_S \ge 10$ °C, en particulier $\Delta T_S \ge 20$ °C, et en particulier $\Delta T_S \ge 40$ °C.

7. Procédé selon l'une des revendications 1 à 6, **caractérisé en ce que** le mélange (58) a une température maximale $T_{Mmax}$, dans lequel, pour $T_{Mmax}$ ce qui suit s'applique :
$T_{Mmax} \le 280$ °C, en particulier $T_{Mmax} \le 250$ °C, et en particulier $T_{Mmax} \le 220$ °C.

8. Procédé selon l'une des revendications 1 à 7, **caractérisé en ce que** le dispositif de dosage (44) comprend une machine à vis sans fin d'alimentation (46) qui débouche dans la machine à vis sans fin (4) et achemine le caoutchouc partiellement déshydraté (3) vers la fusion styrène-acrylonitrile (2).

9. Procédé selon la revendication 8, **caractérisé en ce que** la machine à vis sans fin d'alimentation (46) comprend au moins un arbre à vis sans fin (51, 52) ayant longueur $L_Z$ et un diamètre $D_{Za}$, dans lequel, pour le rapport $L_Z/D_{Za}$, ce qui suit s'applique :
$2 \le L_Z/D_{Za} \le 32$, et en particulier $4 \le L_Z/D_{Za} \le 16$.

10. Procédé selon l'une des revendications 1 à 9, **caractérisé en ce que** le dispositif de dosage (44) comprend une unité de dosage gravimétrique (47), qui est disposée en particulier en amont de la machine à vis sans fin d'alimentation (46) et dose le caoutchouc partiellement déshydraté (3) dans la machine à vis sans fin d'alimentation (46).

11. Procédé selon l'une des revendications 1 à 10, **caractérisé en ce qu'**un premier dispositif de dégazage (42) est disposé au niveau de la machine à vis sans fin (4) en amont d'un point d'alimentation en caoutchouc partiellement déshydraté (3).

12. Procédé selon la revendication 11, **caractérisé en ce qu'**au moins un autre dispositif de dégazage (60, 61) est disposé au niveau de la machine à vis sans fin (4) en aval du point d'alimentation.

13. Procédé selon l'une des revendications 1 à 12, **caractérisé en ce qu'**au niveau du point d'alimentation, le caoutchouc partiellement déshydraté (3) a une proportion de 5 à 35 % en poids, en particulier de 10 à 30 % en poids, et en particulier de 15 à 25 % en poids dans le mélange (58) formé.

Fig. 1

EP 3 175 967 B1

Fig. 2

11

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0534235 B1
- WO 2012158582 A1
- EP 0867463 A1
- WO 9813412 A1
- EP 2353839 A1